(19)

Europäisches
Patentamt
European
Patent Office
Office européen
des brevets

(11) **EP 4 527 488 A1**

(12) **EUROPEAN PATENT APPLICATION**
published in accordance with Art. 153(4) EPC

(43) Date of publication:
**26.03.2025 Bulletin 2025/13**

(21) Application number: **23757502.2**

(22) Date of filing: **14.04.2023**

(51) International Patent Classification (IPC):
***B01D 53/62*** (2006.01)     ***B01D 53/78*** (2006.01)

(52) Cooperative Patent Classification (CPC):
**B01D 53/1493; B01D 53/1406; B01D 53/1475;**
**B01D 53/1481; B01D 53/507; B01D 53/62;**
**B01D 53/75; B01D 53/78;** B01D 2251/2062;
B01D 2257/302; B01D 2257/504; B01D 2259/652;
Y02P 60/20

(86) International application number:
**PCT/CN2023/088402**

(87) International publication number:
**WO 2023/221704 (23.11.2023 Gazette 2023/47)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **16.05.2022 CN 202210531132**

(71) Applicants:
• **Jiangnan Environmental Protection Group Inc.**
**KY1-1002 Grand Cayman (KY)**
• **Jiangsu New Century Jiangnan**
**Environmental Protection Inc., Ltd**
**Nanjing, Jiangsu 211100 (CN)**

(72) Inventors:
• **LUO, Jing**
**Jiangsu 211100 (CN)**
• **ZHANG, Jun**
**Jiangsu 211100 (CN)**
• **WANG, Jinyong**
**Jiangsu 211100 (CN)**
• **QI, Lifang**
**Jiangsu 211100 (CN)**

(74) Representative: **Bottero, Carlo et al**
**Barzanò & Zanardo S.p.A.**
**Via Borgonuovo, 10**
**20121 Milano (IT)**

(54) **AMMONIA DECARBONIZATION COOLING APPARATUS AND METHOD**

(57)     Ammonia-based decarbonization cooling apparatus and a method therefor. The cooling apparatus may include: a first-stage cooling function zone which may use a first circulating liquid to cool a process gas to a temperature of $T_{gas\ 1}$, a second-stage cooling function zone which may use a second circulating liquid to cool the process gas to a temperature of $T_{gas\ 2}$, and a third-stage cooling function zone which may use a third circulating liquid to cool the process gas to a temperature of $T_{gas\ 3}$, wherein $T_{gas\ 3} < T_{gas\ 2} < T_{gas\ 1} < T_{gas\ 0}$, and $T_{gas\ 0}$ is an initial temperature of the process gas when entering the first-stage cooling function zone; a first cold source for cooling the first circulating liquid, a second cold source for cooling the second circulating liquid, and a third cold source for cooling the third circulating liquid, wherein the three cold sources may be different. The apparatus and method of the present invention use circulating water or a closed cooling tower or an air cooler, cold process gas, chilled liquid or a chiller for staged cooling, respectively, to make full use of low-energy cold and recycling of process gas cold, thus saving investment costs and reducing energy consumption.

Figure 1

**Description**

TECHNICAL FIELD

The present invention belongs to the technical field of environmental protection, and specifically relates to a pre-cooling apparatus for staged cooling a process gas prior to ammonia-based decarbonization and a method therefor.

BACKGROUND ART

In recent years, the greenhouse effect has gradually become one of the most serious problems faced by humankind. Carbon dioxide ($CO_2$) is the most important greenhouse gas, and the use of fossil energy is its main emission source. China's total $CO_2$ emissions have ranked first in the world, and the situation where China's energy structure is dominated by coal will continue for a period of time, so coal energy will still be the foundation of new energy peak regulation and energy security. China has promised the world that peak carbon emissions will be reached by 2030 and carbon neutrality by 2060. The capture, storage and resource recovery of $CO_2$ in the emission gases is of great significance for controlling and reducing greenhouse gas emissions and dealing with the greenhouse effect and global warming.

At present, organic amine-based method is the most widely used carbon capture technology in the world. However, it has such problems as high running cost, large emissions of three wastes from the system, and difficult treatment. New decarbonization technologies have also been actively explored both at home and abroad. Compared with the organic amine-based method, the ammonia-based method has the advantages that the regeneration is easy, the running cost is low, and the by-product of decarbonization is the important fertilizer ammonium bicarbonate.

Ammonium bicarbonate is a typical compound fertilizer, which can supply nitrogenous fertilizer and $CO_2$ to plants at the same time. It is especially suitable for modern agriculture with soilless culture and greenhouse plant growth. It truly realizes the resource utilization of $CO_2$, achieves carbon cycle, and can also avoid the secondary pollutions and $CO_2$ environmental accidents that may be caused by underground carbon storage. Compared with decarbonization by organic amine, ammonia is efficient in absorbing $CO_2$, and the product ammonium bicarbonate is more easily regenerated, which can greatly reduce the cost of decarbonization.

Ammonia-based decarbonization technology has been the focus of research, and is a way to manage greenhouse gases. However, ammonia is volatile, resulting in increased ammonia escape.

If left unsolved, a large amount of ammonia escape will not only increase the cost of decarbonization but also cause secondary pollution. Aiming at this problem, lowering the temperature of decarbonization can be used to reduce ammonia escape.

Patent CN201210410873.0 discloses a multi-stage cooling tower system, comprising a plurality of cooling towers, wherein the outlet water of the preceding cooling tower is used as the inlet water of the subsequent cooling tower to perform multi-stage cooling. This apparatus only performs multi-tower cooling on the same cooling gradient to improve the cooling efficiency, and uses the same cold source.

Patent CN200880122376.2 discloses a multi-stage $CO_2$ removal system and method for treating flue gas flow, wherein an absorber vessel is used to make the flue gas flow in contact with an ionic solution containing ammonia at a low temperature of 0-20°C, while the solution of the first absorption stage has a higher temperature and a lower ammonia-carbon ratio than the solution of the third absorption stage. By controlling the ionic solution at a low temperature and controlling the ionic solution of the third stage at a still lower temperature, ammonia escape can be reduced; however, this patent does not mention how to reduce the temperature in an efficient and energy-saving way.

It would be desirable to provide a multi-stage cooling apparatus for wet ammonia-based decarbonization and a method therefor. The apparatus may cool a desulfurized gas in a cooling tower by stages through different cold sources, and may save investment costs and reduce energy consumption.

CONTENTS OF INVENTION

The present invention has achieved the above objects by the following technical solutions.

In the first aspect, the present invention provides a pre-cooling apparatus prior to ammonia-based decarbonization, comprising: a first-stage cooling function zone which uses a first circulating liquid to cool a process gas to a temperature of $T_{gas\ 1}$; a second-stage cooling function zone which uses a second circulating liquid to cool the process gas to a temperature of $T_{gas\ 2}$; a third-stage cooling function zone which uses a third circulating liquid to cool the process gas to a temperature of $T_{gas\ 3}$; a first cold source for cooling the first circulating liquid; a second cold source for cooling the second circulating liquid; and a third cold source for cooling the third circulating liquid; wherein $T_{gas\ 3} < T_{gas\ 2} < T_{gas\ 1} < T_{gas\ 0}$, wherein $T_{gas\ 0}$ is an initial temperature of the process gas when entering the first-stage cooling function zone; and wherein the three cold sources are different.

In the second aspect. the present invention provides a method for cooling a process gas, the method comprising passing the process gas successively through: a first-stage cooling function zone which uses a first circulating liquid to cool a process gas to a temperature of $T_{gas\ 1}$; a second-stage cooling function zone which uses a second circulating liquid to cool the process gas to a temperature of $T_{gas\ 2}$; and a third-stage cooling function zone which uses a third circulating liquid to cool the process gas to a temperature of $T_{gas\ 3}$; using a first cold source to cool the first circulating liquid, using a second cold source to cool the second circulating liquid, and using a third cold source to cool the third circulating liquid, wherein: $T_{gas\ 3} < T_{gas\ 2} < T_{gas\ 1} < T_{gas\ 0}$, wherein $T_{gas\ 0}$ is an initial temperature of the process gas when entering the first-stage cooling function zone; and wherein the three cold sources are different.

Preferably, the first cold source is cooling water from a circulating cooling water or a closed cooling tower, and the first circulating liquid is cooled by a first heat exchanger; or the first cold source is air, and the first circulating liquid is directly cooled by an air cooler. Preferably, the second cold source is a decarbonized cold process gas, and the second circulating liquid is cooled by indirect heat exchange through a second heat exchanger, or the second circulating liquid is cooled by direct heat exchange through cross spraying of spraying liquid. Preferably, the third cold source is a chilled liquid, preferably the chilled liquid is obtained by a chiller; and the third circulating liquid is cooled by a third heat exchanger, or the third circulating liquid is directly cooled by the cold source of the chiller.

The apparatus and method of the present invention use circulating cooling water or a closed cooling tower or an air cooler, cold process gas, chilled liquid as cold source, respectively, cool process gas by spraying circulating liquid, to make full use of low-energy cold and recycling of process gas cold, thus saving investment costs and reducing energy consumption. In addition, the apparatus and method of the present invention enable reducing the temperature of process gas to a lower level, for example, 10-30 °C, thus can reduce significantly ammonia escape in the subsequent decarbonization process.

DESCRIPTION OF FIGURES

Fig. 1 shows a pre-cooling apparatus prior to ammonia-based decarbonization according to Example 1.
Fig. 2 shows a pre-cooling apparatus prior to ammonia-based decarbonization according to Example 2.
Fig. 3 shows a pre-cooling apparatus prior to ammonia-based decarbonization according to a Comparative Example.

In the drawings, the various reference marks have the following meanings:
Process gas 1; Decarbonization cooling tower 2; First-stage cooling zone (of cooling tower) 2-1; Second-stage cooling zone (of cooling tower) 2-2; Third-stage cooling zone (of cooling tower) 2-3; Circulation pump (of first-stage cooling zone of cooling tower) 3-1; Circulation pump (of second-stage cooling zone of cooling tower) 3-2; Circulation pump (of third-stage cooling zone of cooling tower) 3-3; Heat exchanger (of first-stage cooling zone of cooling tower) 4-1; Heat exchanger (of second-stage cooling zone of cooling tower) 4-2; Heat exchanger (of third-stage cooling zone of cooling tower) 4-3; Air cooler 4-4; Circulating cooling water 5-1; Chilled water 5-2; Process gas output pipeline (of cooling tower) 6; Decarbonization absorption tower 7; Circulation pump (of decarbonization absorption tower) 8; Process gas output pipeline (of decarbonization absorption tower) 9; Circulation pump (of water washing zone of ammonia escape control system) 10; Process gas discharge 11; and Ammonia escape control system 12.

DETAILED DESCRIPTION OF PREFERRED EMBODIMENTS

In the first aspect, the present invention provides a pre-cooling apparatus prior to ammonia-based decarbonization, comprising: a first-stage cooling function zone which uses a first circulating liquid to cool a process gas to a temperature of $T_{gas\ 1}$; a second-stage cooling function zone which uses a second circulating liquid to cool the process gas to a temperature of $T_{gas\ 2}$; a third-stage cooling function zone which uses a third circulating liquid to cool the process gas to a temperature of $T_{gas\ 3}$; a first cold source for cooling the first circulating liquid; a second cold source for cooling the second circulating liquid; and a third cold source for cooling the third circulating liquid; wherein $T_{gas\ 3} < T_{gas\ 2} < T_{gas\ 1} < T_{gas\ 0}$, wherein $T_{gas\ 0}$ is an initial temperature of the process gas when entering the first-stage cooling function zone; and wherein the three cold sources are different.

In one embodiment, the first cold source is cooling water from a circulating cooling water or a closed cooling tower; and the first circulating liquid is cooled by a first heat exchanger.

In one embodiment, the first cold source is air; and the first circulating liquid is directly cooled by an air cooler.

In one embodiment, the second cold source is a decarbonized cold process gas; and the second circulating liquid is cooled by indirect heat exchange through a second heat exchanger, or the second circulating liquid is cooled by direct heat exchange through cross spraying of spraying liquid.

In one embodiment, the third cold source is a chilled liquid, preferably the chilled liquid is obtained by a chiller; and the third circulating liquid is cooled by a third heat exchanger, or the third circulating liquid is directly cooled by the cold source of the chiller.

The first heat exchanger and the third heat exchanger are liquid-liquid heat exchangers, preferably plate heat exchangers. The second heat exchanger is a gas-liquid heat exchanger, preferably a shell-and-tube heat exchanger.

In one embodiment, devices or components that only allow gas to pass through are provided between the cooling function zones.

In one embodiment, at least one layer of liquid distributor is provided in each cooling function zone.

The liquid distributor may be a trough distributor or a spray distributor.

In one embodiment, the three function zones may be combined into one tower or may be present as a plurality of towers.

When the three function zones are combined into one tower, i.e. a cooling tower, the cooling apparatus of the present invention includes a cooling tower and cold sources. The cooling tower includes, from bottom to top, a first-stage cooling function zone, a second-stage cooling function zone, and a third-stage cooling function zone, wherein each of the cooling function zones and the cold sources may be arranged as described herein.

In one embodiment, $T_{gas\ 0}$ is in the range 40-80°C; and/or $T_{gas\ 1}$ is in the range 35-48°C; and/or $T_{gas\ 2}$ is in the range 15-40°C; and/or $T_{gas\ 3}$ is in the range 10-30°C.

In one embodiment, the temperature at which the first circulating liquid enters a tower is $T_{liquid\ 1}$; and the temperature at which the first circulating liquid exits the tower is $T_{liquid\ 1'}$, wherein $T_{liquid\ 1} < T_{liquid\ 1'}$, and $T_{gas\ 0} - T_{liquid\ 1'} = \Delta T_1$; the temperature at which the second circulating liquid enters the tower is $T_{liquid\ 2}$; and the temperature at which the second circulating liquid exits the tower is $T_{liquid\ 2'}$, wherein $T_{liquid\ 2} < T_{liquid\ 2'}$, and $T_{gas\ 1} - T_{liquid\ 2'} = \Delta T_2$; and the temperature at which the third circulating liquid enters the tower is $T_{liquid\ 3}$; and the temperature at which the third circulating liquid exits the tower is $T_{liquid\ 3'}$, wherein $T_{liquid\ 3} < T_{liquid\ 3'}$, and $T_{gas\ 2} - T_{liquid\ 3'} = \Delta T_3$; wherein each of $\Delta T_1$, $\Delta T_2$ and $\Delta T_3$ is, independently of the others, $\geq 1$°C, preferably 2-15°C, and more preferably 2-5°C.

In one embodiment, $T_{liquid\ 1}$ is in the range 10-40°C, and $T_{liquid\ 1'}$ is in the range 15-50°C; and/or $T_{liquid\ 2}$ is in the range 15-36°C, and $T_{liquid\ 2'}$ is in the range 20-45°C; and/or $T_{liquid\ 3}$ is in the range 0-25°C, and $T_{liquid\ 3'}$ is in the range 10-40°C.

In one embodiment, the temperature of the first cold source is $T_{source\ 1}$ before heat exchange and $T_{source\ 1'}$ after heat exchange, wherein $T_{source\ 1} < T_{source\ 1'}$; the temperature of the second cold source is $T_{source\ 2}$ before heat exchange and $T_{source\ 2'}$ after heat exchange, wherein $T_{source\ 2} < T_{source\ 2'}$; and the temperature of the third cold source is $T_{source\ 3}$ before heat exchange and $T_{source\ 3'}$ after heat exchange, wherein $T_{source\ 3} < T_{source\ 3'}$.

In one embodiment, $T_{source\ 1}$ is in the range 5-35°C, and $T_{source\ 1'}$ is in the range 10-45°C; and/or $T_{source\ 2}$ is in the range 10-30°C, and $T_{source\ 2'}$ is in the range 15-40°C; and/or $T_{source\ 3}$ is in the range -17 to 10°C, and $T_{source\ 3'}$ is in the range 0-30°C.

In one embodiment, the cooling apparatus is a part of an ammonia-based desulfurization and decarbonization system; the upstream of the cooling apparatus is connected to a desulfurization apparatus; the downstream of the cooling apparatus is connected to a decarbonization apparatus; and the process gas comes from the desulfurization apparatus and enters the decarbonization apparatus after being cooled by the cooling apparatus.

Preferably, the process gas is a desulfurized process gas from the desulfurization apparatus. The process gas has a temperature of 40-80°C, preferably a temperature of 40-60°C. The desulfurization process has removed most of $SO_2$ from the process gas, so that the desulfurized process gas mainly contains $CO_2$ and a small amount of $H_2O$.

In the second aspect, the present invention provides a method for cooling a process gas, the method comprising passing the process gas successively through: a first-stage cooling function zone which uses a first circulating liquid to cool a process gas to a temperature of $T_{gas\ 1}$; a second-stage cooling function zone which uses a second circulating liquid to cool the process gas to a temperature of $T_{gas\ 2}$; and a third-stage cooling function zone which uses a third circulating liquid to cool the process gas to a temperature of $T_{gas\ 3}$; using a first cold source to cool the first circulating liquid, using a second cold source to cool the second circulating liquid, and using a third cold source to cool the third circulating liquid, wherein: $T_{gas\ 3} < T_{gas\ 2} < T_{gas\ 1} < T_{gas\ 0}$, wherein $T_{gas\ 0}$ is an initial temperature of the process gas when entering the first-stage cooling function zone; and wherein the three cold sources are different.

In one embodiment, the first cold source is cooling water from a circulating cooling water or a closed cooling tower; and the first circulating liquid is cooled by a first heat exchanger.

In one embodiment, the first cold source is air; and the first circulating liquid is directly cooled by an air cooler.

In one embodiment, the second cold source is a decarbonized cold process gas; and the second circulating liquid is cooled by indirect heat exchange through a second heat exchanger, or the second circulating liquid is cooled by direct heat exchange through cross spraying of spraying liquid.

In one embodiment, the third cold source is a chilled liquid, preferably the chilled liquid is obtained by a chiller; and the third circulating liquid is cooled by a third heat exchanger, or the third circulating liquid is directly cooled by the cold source of the chiller.

In one embodiment, $T_{gas\ 0}$ is in the range 40-80°C; and/or $T_{gas\ 1}$ is in the range 35-48°C; and/or $T_{gas\ 2}$ is in the range 15-40°C; and/or $T_{gas\ 3}$ is in the range 10-30°C.

In one embodiment, the temperature at which the first circulating liquid enters a tower is $T_{liquid\ 1}$; and the temperature at which the first circulating liquid exits the tower is $T_{liquid\ 1'}$, wherein $T_{liquid\ 1}<T_{liquid\ 1'}$, and $T_{gas\ 0}-T_{liquid\ 1'}=\Delta T_1$; the temperature at which the second circulating liquid enters the tower is $T_{liquid\ 2}$; and the temperature at which the second circulating liquid exits the tower is $T_{liquid\ 2'}$, wherein $T_{liquid\ 2}<T_{liquid\ 2'}$, and $T_{gas\ 1}-T_{liquid\ 2'}=\Delta T_2$; and the temperature at which the third circulating liquid enters the tower is $T_{liquid\ 3}$; and the temperature at which the third circulating liquid exits the tower is $T_{liquid\ 3'}$, wherein $T_{liquid\ 3}<T_{liquid\ 3'}$, and $T_{gas\ 2}-T_{liquid\ 3'}=\Delta T_3$; wherein each of $\Delta T_1$, $\Delta T_2$ and $\Delta T_3$ is, independently of the others, $\geq1°C$, preferably 2-15°C, and more preferably 2-5°C.

In one embodiment, $T_{liquid\ 1}$ is in the range 10-40°C, and $T_{liquid\ 1'}$ is in the range 15-50°C; and/or $T_{liquid\ 2}$ is in the range 15-36°C, and $T_{liquid\ 2'}$ is in the range 20-45°C; and/or $T_{liquid\ 3}$ is in the range 0-25°C, and $T_{liquid\ 3'}$ is in the range 10-40°C.

In one embodiment, the temperature of the first cold source is $T_{source\ 1}$ before heat exchange and $T_{source\ 1'}$ after heat exchange, wherein $T_{source\ 1}<T_{source\ 1'}$; the temperature of the second cold source is $T_{source\ 2}$ before heat exchange and $T_{source\ 2'}$ after heat exchange, wherein $T_{source\ 2}<T_{source\ 2'}$; and the temperature of the third cold source is $T_{source\ 3}$ before heat exchange and $T_{source\ 3'}$ after heat exchange, wherein $T_{source\ 3}<T_{source\ 3'}$.

In one embodiment, $T_{source\ 1}$ is in the range 5-35°C, and $T_{source\ 1'}$ is in the range 10-45°C; and/or $T_{source\ 2}$ is in the range 10-30°C, and $T_{source\ 2'}$ is in the range 15-40°C; and/or $T_{source\ 3}$ is in the range -17 to 10°C, and $T_{source\ 3'}$ is in the range 0-30°C.

In one embodiment, the method is part of an ammonia-based desulfurization and decarbonization method. Upstream of the cooling method is the desulfurization process. Downstrean of the cooling method is the decarbonization process. The process gas comes from the desulfurization process and enters the decarbonization process after cooled by the cooling method.

In the apparatus and method of the present invention, the circulating liquid may be water. During the circulation, components entrained by the process gas may enter the circulating liquid, so that the circulating liquid may include such components as ammonium sulfate.

In one embodiment, the content of ammonium sulfate in the cooling circulating liquid is in the range 0-5wt%, and that in the first stage is greater than that in the second stage, which is greater that in the third stage.

Preferably, the method for cooling a process gas of the present invention is carried out by the cooling apparatus as described herein. Preferably, the cooling apparatus of the present invention is the apparatus used to perform the method for cooling a process gas described herein. The various features described herein for the cooling apparatus are also applicable to the method, and vice versa.

SPECIFIC MODE FOR CARRYING OUT THE INVENTION

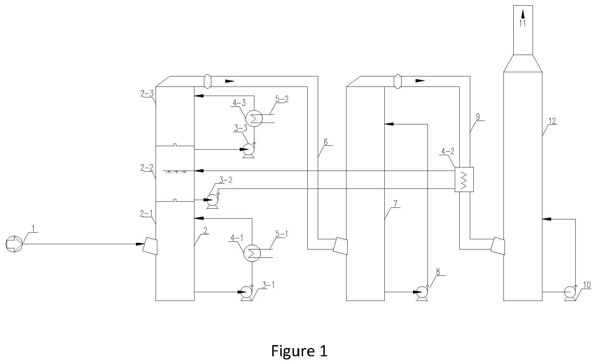

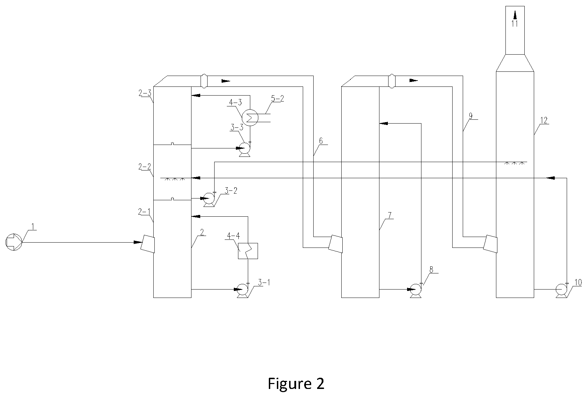

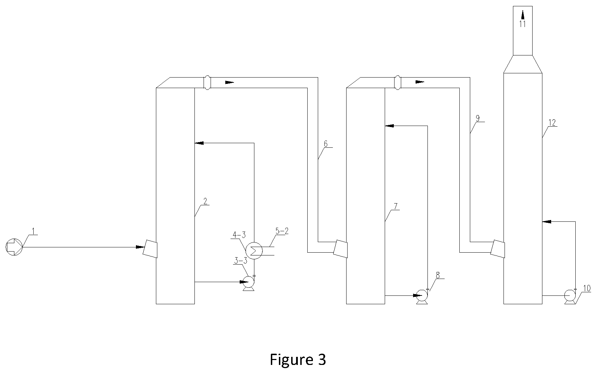

The following examples are provided to illustrate the present invention without limiting its scope. Example 1 is a cooling apparatus according to the present invention and is shown in Fig. 1. Example 2 is a cooling apparatus according to the present invention and is shown in Fig. 2. A Comparative Example is shown in Fig. 3. The difference between Fig. 1 and Fig. 2 lies mainly in the cold source and the cooling mode. In Fig. 1, the first-stage cooling and the second-stage cooling are respectively: the circulating cooling water 5-1 cools the circulating liquid through the heat exchanger 4-1, and the cold process gas 9 cools the circulating liquid through the heat exchanger 4-2. In Fig. 2, the first-stage cooling and the second-stage cooling are respectively: the circulating liquid is cooled by the air cooler 4-4, and the circulating liquid is cooled by spraying contact with the cold process gas 9. In Fig. 3, the cooling tower cools the circulating liquid only by the chilled water 5-2 through the heat exchanger 4-3.

EXAMPLE 1

As shown in Fig. 1, the desulfurized process gas 1 (893837Nm$^3$/h, 50°C) by ammonia-based method entered the first-stage cooling zone 2-1 of the decarbonization cooling tower 2. The circulating liquid was pumped by the circulation pump 3-1 of the first-stage cooling zone into the cooling tower for spraying and contacting with the process gas to cool the process gas to 42°C. The circulating liquid pipeline was provided with the heat exchanger 4-1, and the circulating liquid was cooled by the circulating cooling water 5-1. The temperature at which the circulating liquid entered the tower was 38°C, and the temperature at which the circulating liquid exited the tower was 48°C. The temperature at which the circulating cooling water entered the heat exchanger was 30°C, and the temperature at which the circulating cooling water exited the heat exchanger was 40°C.

The process gas after the first-stage cooling entered the second-stage cooling zone 2-2 through a liquid collector. The process gas was cooled to 39°C by means of spraying. The circulating liquid reached the gas heat exchanger 4-2 for heat exchange with decarbonized process gas to reduce the temperature, and then returned to the second-stage cooling zone 2-2 for cooling the process gas. The temperature at which the circulating liquid entered the tower was 30°C, and the temperature at which the circulating liquid exited the tower was 40°C. The temperature of the decarbonized process gas increased from 20°C to 31°C.

Then, the process gas after the second-stage cooling entered the third-stage cooling zone 2-3 through a liquid collector. The circulating liquid was cooled by the chilled water 5-2 through the heat exchanger 4-3, and entered the tower for spraying to cool the process gas to 25°C. The temperature at which the circulating liquid entered the tower was 20°C, and the temperature at which the circulating liquid exited the tower was 37°C. The temperature at which the chilled water entered the heat exchanger 4-3 was 7°C, and the temperature at which the chilled water exited the heat exchanger 4-3 was 17°C.

After being cooled by the cooling tower, the process gas was output through the flue 6 to the decarbonization tower 7, and the circulating liquid was contacted with the process gas through the circulation pump 8 to absorb carbon dioxide. The decarbonized process gas entered the ammonia escape control system 12 through the flue 9, and the flue 9 was provided with the gas heat exchanger 4-2. The circulating liquid in the ammonia escape control system was washed by the circulation pump 10, and contacted with the process gas to absorb free ammonia, and the process gas 11 after ammonia removal was vented through a process gas discharge outlet.

The consumption of circulating cooling water was 1890 t/h, and the consumption of chilled water was 1894 t/h.

The main process parameters of the cooling treatment in Example 1 are shown in Table 1.

Table 1. Main process parameters of cooling treatment in Example 1

| Example 1 | Initial process gas temperature (°C) | Achieved process gas temperature (°C) | Temperature at which circulating liquid enters tower (°C) | Temperature at which circulating liquid leaves tower (°C) | Temperature of cold source before heat exchange (°C) | Temperature of cold source after heat exchange (°C) |
|---|---|---|---|---|---|---|
| First stage | 50 | 42 | 38 | 48 | 30 | 40 |
| Second stage | 42 | 39 | 30 | 40 | 20 | 31 |
| Third stage | 39 | 25 | 20 | 37 | 7 | 17 |

EXAMPLE 2

As shown in Fig. 2, the desulfurized process gas 1 (893837Nm$^3$/h, 50°C) by ammonia-based method entered the first-stage cooling zone 2-1 of the decarbonization cooling tower 2. The circulating liquid was pumped by the circulation pump 3-1 of the first-stage cooling zone into the cooling tower for spraying and contacting with the process gas to cool the process gas to 42°C. The circulating liquid pipeline was provided with the air cooler 4-4, and the circulating liquid was directly cooled by the air cooler 4-4. The temperature at which the circulating liquid entered the tower was 38°C, and the temperature at which the circulating liquid exited the tower was 48°C.

The process gas after the first-stage cooling reached the second-stage cooling zone 2-2 through a liquid collector. The process gas was cooled to 32°C by means of spraying, and the circulating liquid reached ammonia escape control system 12 for heat exchange by spraying with decarbonized process gas to reduce temperature, and then returned to the second-stage cooling zone 2-2 for cooling the process gas. The temperature at which the circulating liquid entered the cooling tower was 25°C, and the temperature at which the circulating liquid exited the cooling tower was 40°C. The temperature of the decarbonized process gas increased from 20°C to 35°C. Then, the process gas after the second-stage cooling entered the third-stage cooling zone 2-3 through a liquid collector, the circulating liquid was cooled by the chilled water 5-2 through the heat exchanger 4-3, and entered the tower for spraying to cool the process gas to 25°C. The temperature at which the circulating liquid entered the tower was 20°C, and the temperature at which the circulating liquid exited the tower was 30°C. The temperature at which the chilled water entered the heat exchanger 4-3 was 7°C, and the temperature at which the chilled water exited the heat exchanger 4-3 was 17°C.

After being cooled by the cooling tower, the process gas was output through the flue 6 to the decarbonization tower 7, and the circulating liquid was contacted with the process gas through the circulation pump 8 to absorb carbon dioxide. The decarbonized process gas entered the ammonia escape control system 12 through the flue 9. The circulating liquid in the ammonia escape control system was washed by the circulation pump 10, and contacted with the process gas to absorb free ammonia, and the process gas 11 after ammonia removal was vented through a process gas discharge outlet.

The consumption of chilled water was 818 t/h.

The main process parameters of the cooling treatment in Example 2 are shown in Table 2.

Table 2. Main process parameters of cooling treatment in Example 2

| Example 2 | Initial process gas temperature (°C) | Achieved process gas temperature (°C) | Temperature at which circulating liquid enters tower (°C) | Temperature at which circulating liquid leaves tower (°C) | Temperature of cold source before heat exchange (°C) | Temperature of cold source after heat exchange (°C) |
|---|---|---|---|---|---|---|
| First stage | 50 | 42 | 38 | 48 | | |
| Second stage | 42 | 32 | 25 | 40 | 20 | 35 |
| Third stage | 32 | 25 | 20 | 30 | 7 | 17 |

COMPARATIVE EXAMPLE

As shown in Fig. 3, the desulfurized process gas 1 (893837Nm$^3$/h, 50°C) by ammonia-based method entered the decarbonization cooling tower 2. The circulating liquid was cooled by the chilled water 5-2 through the heat exchanger 4-3, and entered the tower for spraying to cool the process gas to 25°C. The temperature at which the circulating liquid entered the tower was 20°C, and the temperature at which the circulating liquid exited the tower was 48°C. The temperature at which the chilled water entered the heat exchanger 4-3 was 7°C, and the temperature at which the chilled water exited the heat exchanger 4-3 was 17°C.

The consumption of chilled water was 4267 t/h.

The main process parameters of the cooling treatment in Comparative Example are shown in Table 3.

Table 3. Main process parameters of cooling treatment in Comparative Example

| Comparative Example | Initial process gas temp. (°C) | Achieved process gas temp. (°C) | Temp. at which circulating liquid enters tower (°C) | Temp. at which circulating liquid leaves tower (°C) | Temp. of cold source before heat exchange (°C) | Temp. of cold source after heat exchange (°C) |
|---|---|---|---|---|---|---|
| First stage | 50 | 25 | 20 | 48 | 7 | 17 |

The present invention further relates to following embodiments:

1. A pre-cooling apparatus prior to ammonia-based decarbonization, comprising:

a first-stage cooling function zone which uses a first circulating liquid to cool a process gas to a temperature of $T_{gas\ 1}$;

a second-stage cooling function zone which uses a second circulating liquid to cool the process gas to a temperature of $T_{gas\ 2}$;

a third-stage cooling function zone which uses a third circulating liquid to cool the process gas to a temperature of $T_{gas\ 3}$;

a first cold source for cooling the first circulating liquid;

a second cold source for cooling the second circulating liquid; and

a third cold source for cooling the third circulating liquid;

wherein:

$$T_{gas\ 3} < T_{gas\ 2} < T_{gas\ 1} < T_{gas\ 0};$$

$T_{gas\ 0}$ is an initial temperature of the process gas when entering the first-stage cooling function zone; preferably, $T_{gas\ 0}$ is in the range 40-80°C; and/or $T_{gas\ 1}$ is in the range 35-48°C; and/or $T_{gas\ 2}$ is in the range 15-40°C; and/or $T_{gas\ 3}$ is in the range 10-30°C; and

the three cold sources are different.

2. The pre-cooling apparatus of embodiment 1 wherein:

the first cold source is cooling water from a circulating cooling water or a closed cooling tower, and the first circulating liquid is cooled by a first heat exchanger, or the first cold source is air, and the first circulating liquid is directly cooled by an air cooler; and/or

the second cold source is a decarbonized cold process gas, and the second circulating liquid is cooled by indirect heat exchange through a second heat exchanger, or the second circulating liquid is cooled by direct heat exchange through cross spraying of spraying liquid; and/or

the third cold source is a chilled liquid, preferably the chilled liquid is obtained by a chiller, and the third circulating liquid is cooled by a third heat exchanger, or the third circulating liquid is directly cooled by the cold source of the chiller.

3. The pre-cooling apparatus of embodiment 1 or 2 wherein:

devices or components that only allow gas to pass through are provided between the cooling function zones; and/or

at least one layer of liquid distributor is provided in each cooling function zone, the liquid distributor may be a trough distributor or a spray distributor; and/or

the three function zones may be combined into one tower or may be present as a plurality of towers; and/or

the cooling apparatus is a part of an ammonia-based desulfurization and decarbonization system, the upstream of the cooling apparatus is connected to a desulfurization apparatus, the downstream of the cooling apparatus is connected to a decarbonization apparatus, and the process gas comes from the desulfurization apparatus and enters the decarbonization apparatus after being cooled by the cooling apparatus.

4. The pre-cooling apparatus of any one of embodiments 1-3 wherein:

the temperature at which the first circulating liquid enters a tower is $T_{liquid\ 1}$, and the temperature at which the first circulating liquid exits the tower is $T_{liquid\ 1'}$, wherein $T_{liquid\ 1} < T_{liquid\ 1'}$, and $T_{gas\ 0} - T_{liquid\ 1'} = \Delta T_1$; preferably, $T_{liquid\ 1}$ is in the range 10-40°C, and $T_{liquid\ 1'}$ is in the range 15-50°C;

the temperature at which the second circulating liquid enters the tower is $T_{liquid\ 2}$, and the temperature at which the second circulating liquid exits the tower is $T_{liquid\ 2'}$, wherein $T_{liquid\ 2} < T_{liquid\ 2'}$, and $T_{gas\ 1} - T_{liquid\ 2'} = \Delta T_2$; preferably, $T_{liquid\ 2}$ is in the range 15-36°C, and $T_{liquid\ 2'}$ is in the range 20-45°C; and

the temperature at which the third circulating liquid enters the tower is $T_{liquid\ 3}$, and the temperature at which the third circulating liquid exits the tower is $T_{liquid\ 3'}$, wherein $T_{liquid\ 3} < T_{liquid\ 3'}$, and $T_{gas\ 2} - T_{liquid\ 3'} = \Delta T_3$; preferably, $T_{liquid\ 3}$ is in the range 0-25°C, and $T_{liquid\ 3'}$ is in the range 10-40°C;

wherein each of $\Delta T_1$, $\Delta T_2$ and $\Delta T_3$ is, independently of the others, $\geq 1$°C, preferably 2-15°C, and more preferably 2-5°C.

5. The pre-cooling apparatus of any one of embodiments 1-4 wherein:

the temperature of the first cold source is $T_{source\ 1}$ before heat exchange and $T_{source\ 1'}$ after heat exchange, wherein $T_{source\ 1} < T_{source\ 1'}$; preferably, $T_{source\ 1}$ is in the range 5-35°C, and $T_{source\ 1'}$ is in the range 10-45°C;

the temperature of the second cold source is $T_{source\ 2}$ before heat exchange and $T_{source\ 2'}$ after heat exchange, wherein $T_{source\ 2} < T_{source\ 2'}$; preferably, $T_{source\ 2}$ is in the range 10-30°C, and $T_{source\ 2'}$ is in the range 15-40°C; and

the temperature of the third cold source is $T_{source\ 3}$ before heat exchange and $T_{source\ 3'}$ after heat exchange, wherein $T_{source\ 3} < T_{source\ 3'}$; preferably, $T_{source\ 3}$ is in the range -17 to 10°C, and $T_{source\ 3'}$ is in the range 0-30°C.

6. A method for cooling a process gas, the method comprising passing the process gas successively through:

a first-stage cooling function zone which uses a first circulating liquid to cool a process gas to a temperature of $T_{gas\ 1}$;

a second-stage cooling function zone which uses a second circulating liquid to cool the process gas to a temperature of $T_{gas\ 2}$; and

a third-stage cooling function zone which uses a third circulating liquid to cool the process gas to a temperature of $T_{gas\ 3}$;

using a first cold source to cool the first circulating liquid,

using a second cold source to cool the second circulating liquid, and

using a third cold source to cool the third circulating liquid,

wherein:

$$T_{gas\,3} < T_{gas\,2} < T_{gas\,1} < T_{gas\,0};$$

$T_{gas\,0}$ is an initial temperature of the process gas when entering the first-stage cooling function zone; preferably, $T_{gas\,0}$ is in the range 40-80°C; and/or $T_{gas\,1}$ is in the range 35-48°C; and/or $T_{gas\,2}$ is in the range 15-40°C; and/or $T_{gas\,3}$ is in the range 10-30°C; and
the three cold sources are different.

7. The method of embodiment 6 wherein:

the first cold source is cooling water from a circulating cooling water or a closed cooling tower, and the first circulating liquid is cooled by a first heat exchanger, or the first cold source is air, and the first circulating liquid is directly cooled by an air cooler; and/or
the second cold source is a decarbonized cold process gas, and the second circulating liquid is cooled by indirect heat exchange through a second heat exchanger, or the second circulating liquid is cooled by direct heat exchange through cross spraying of spraying liquid; and/or
the third cold source is a chilled liquid, preferably the chilled liquid is obtained by a chiller, and the third circulating liquid is cooled by a third heat exchanger, or the third circulating liquid is directly cooled by the cold source of the chiller.

8. The method of embodiment 6 or 7 wherein:

the temperature at which the first circulating liquid enters a tower is $T_{liquid1}$, and the temperature at which the first circulating liquid exits the tower is $T_{liquid\,1'}$, wherein $T_{liquid\,1} < T_{liquid\,1'}$, and $T_{gas\,0} - T_{liquid\,1'} = \Delta T_1$; preferably, $T_{liquid\,1}$ is in the range 10-40°C, and $T_{liquid\,1'}$ is in the range 15-50°C;
the temperature at which the second circulating liquid enters the tower is $T_{liquid\,2}$, and the temperature at which the second circulating liquid exits the tower is $T_{liquid2'}$, wherein $T_{liquid\,2} < T_{liquid\,2'}$, and $T_{gas\,1} - T_{liquid\,2'} = \Delta T_2$; preferably, $T_{liquid\,2}$ is in the range 15-36°C, and $T_{liquid\,2'}$ is in the range 20-45°C; and
the temperature at which the third circulating liquid enters the tower is $T_{liquid3}$, and the temperature at which the third circulating liquid exits the tower is $T_{liquid\,3'}$, wherein $T_{liquid\,3} < T_{liquid\,3'}$, and $T_{gas\,2} - T_{liquid\,3'} = \Delta T_3$; preferably, $T_{liquid\,3}$ is in the range 0-25°C, and $T_{liquid\,3'}$ is in the range 10-40°C;
wherein each of $\Delta T_1$, $\Delta T_2$ and $\Delta T_3$ is, independently of the others, $\geq 1$°C, preferably 2-15°C, and more preferably 2-5°C..

9. The method of any one of embodiments 6-8 wherein:

the temperature of the first cold source is $T_{source\,1}$ before heat exchange and $T_{source\,1'}$ after heat exchange, wherein $T_{source\,1} < T_{source\,1'}$; preferably, $T_{source\,1}$ is in the range 5-35°C, and $T_{source\,1'}$ is in the range 10-45°C;
the temperature of the second cold source is $T_{source\,2}$ before heat exchange and $T_{source\,2'}$ after heat exchange, wherein $T_{source\,2} < T_{source\,2'}$; preferably, $T_{source\,2}$ is in the range 10-30°C, and $T_{source\,2'}$ is in the range 15-40°C; and
the temperature of the third cold source is $T_{source\,3}$ before heat exchange and $T_{source\,3'}$ after heat exchange, wherein $T_{source\,3} < T_{source\,3'}$; preferably, $T_{source\,3}$ is in the range -17 to 10°C, and $T_{source\,3'}$ is in the range 0-30°C.

10. The method of any one of embodiments 6-9 wherein:

the cooling method is a part of an ammonia-based desulfurization and decarbonization method, the upstream of the cooling method is the desulfurization process, and the downstream of the cooling method is the decarbonization process, the process gas comes from the desulfurization process, and enters the decarbonization process after cooled by the cooling method; and/or
wherein a content of ammonium sulfate: in the cooling circulating liquid is in the range 0-5wt%; and in the first stage is greater than that in the second stage, which is greater than that in the third stage.

While specific embodiments of the present invention have been described above, those skilled in the art should understand that these are only illustrations, and that the scope of the present invention is defined by the appended claims. Various changes and modifications may be made to these embodiments by those skilled in the art without departing from the principle and spirit of the present invention, and these changes and modifications all fall within the scope of the present invention. Moreover, it should be understood by those skilled in the art that the features described herein with respect to one or more embodiments may be combined with other embodiments so long as such combinations do not conflict with objects of the present invention.

**Claims**

1. A pre-cooling apparatus prior to ammonia-based decarbonization, comprising:

   a first-stage cooling function zone which uses a first circulating liquid to cool a process gas to a temperature of $T_{gas\ 1}$;
   a second-stage cooling function zone which uses a second circulating liquid to cool the process gas to a temperature of $T_{gas\ 2}$;
   a third-stage cooling function zone which uses a third circulating liquid to cool the process gas to a temperature of $T_{gas\ 3}$;
   a first cold source for cooling the first circulating liquid;
   a second cold source for cooling the second circulating liquid; and
   a third cold source for cooling the third circulating liquid;
   wherein:

$$T_{gas\ 3} < T_{gas\ 2} < T_{gas\ 1} < T_{gas\ 0};$$

   $T_{gas\ 0}$ is an initial temperature of the process gas when entering the first-stage cooling function zone; and
   the three cold sources are different.

2. The pre-cooling apparatus of claim 1 wherein:

   the first cold source is cooling water from a circulating cooling water or a closed cooling tower; and
   the first circulating liquid is cooled by a first heat exchanger.

3. The pre-cooling apparatus according to claim 1 wherein:

   the first cold source is air; and
   the first circulating liquid is directly cooled by an air cooler.

4. The pre-cooling apparatus of claim 1 wherein:
   the second cold source is a decarbonized cold process gas; and
   the second circulating liquid is cooled by indirect heat exchange through a second heat exchanger, or the second circulating liquid is cooled by direct heat exchange through cross spraying of spraying liquid.

5. The pre-cooling apparatus of claim 1 wherein:

   the third cold source is a chilled liquid, preferably the chilled liquid is obtained by a chiller; and
   the third circulating liquid is cooled by a third heat exchanger, or the third circulating liquid is directly cooled by the cold source of the chiller.

6. The pre-cooling apparatus of any one of claims 1-5 wherein:
   devices or components that only allow gas to pass through are provided between the cooling function zones.

7. The pre-cooling apparatus of any one of claims 1-6 wherein:

   at least one layer of liquid distributor is provided in each cooling function zone;
   the liquid distributor may be a trough distributor or a spray distributor.

8. The pre-cooling apparatus of any one of claims 1-7 wherein:
   the three function zones may be combined into one tower or may be present as a plurality of towers .

9. The pre-cooling apparatus of any one of claims 1-8 wherein:

   $T_{gas\ 0}$ is in the range 40-80°C; and/or
   $T_{gas\ 1}$ is in the range 35-48°C; and/or
   $T_{gas\ 2}$ is in the range 15-40°C; and/or
   $T_{gas\ 3}$ is in the range 10-30°C.

**10.** The pre-cooling apparatus of any one of claims 1-9 wherein:

the temperature at which the first circulating liquid enters a tower is $T_{liquid\ 1}$; and
the temperature at which the first circulating liquid exits the tower is $T_{liquid\ 1'}$, wherein $T_{liquid\ 1} < T_{liquid\ 1'}$, and $T_{gas\ 0} - T_{liquid\ 1'} = \Delta T_1$;
the temperature at which the second circulating liquid enters the tower is $T_{liquid\ 2}$; and
the temperature at which the second circulating liquid exits the tower is $T_{liquid\ 2'}$, wherein $T_{liquid\ 2} < T_{liquid\ 2'}$, and $T_{gas\ 1} - T_{liquid\ 2'} = \Delta T_2$; and
the temperature at which the third circulating liquid enters the tower is $T_{liquid\ 3}$; and
the temperature at which the third circulating liquid exits the tower is $T_{liquid\ 3'}$, wherein $T_{liquid\ 3} < T_{liquid\ 3'}$, and $T_{gas\ 2} - T_{liquid\ 3'} = \Delta T_3$;
wherein each of $\Delta T_1$, $\Delta T_2$ and $\Delta T_3$ is, independently of the others, $\geq 1°C$, preferably 2-15°C, and more preferably 2-5°C.

**11.** The pre-cooling apparatus of claim 10 wherein:

$T_{liquid\ 1}$ is in the range 10-40°C, and $T_{liquid\ 1'}$ is in the range 15-50°C; and/or
$T_{liquid\ 2}$ is in the range 15-36°C, and $T_{liquid\ 2'}$ is in the range 20-45°C; and/or
$T_{liquid\ 3}$ is in the range 0-25°C, and $T_{liquid\ 3'}$ is in the range 10-40°C.

**12.** The pre-cooling apparatus of any one of claims 1-11 wherein:

the temperature of the first cold source is $T_{source\ 1}$ before heat exchange and $T_{source\ 1'}$ after heat exchange, wherein $T_{source\ 1} < T_{source\ 1'}$;
the temperature of the second cold source is $T_{source\ 2}$ before heat exchange and $T_{source\ 2'}$ after heat exchange, wherein $T_{source\ 2} < T_{source\ 2'}$; and
the temperature of the third cold source is $T_{source\ 3}$ before heat exchange and $T_{source\ 3'}$ after heat exchange, wherein $T_{source\ 3} < T_{source\ 3'}$.

**13.** The pre-cooling apparatus of claim 12 wherein

$T_{source\ 1}$ is in the range 5-35°C, and $T_{source\ 1'}$ is in the range 10-45°C; and/or
$T_{source\ 2}$ is in the range 10-30°C, and $T_{source\ 2'}$ is in the range 15-40°C; and/or
$T_{source\ 3}$ is in the range -17 to 10°C, and $T_{source\ 3'}$ is in the range 0-30°C.

**14.** The pre-cooling apparatus of any one of claims 1-13 wherein:

the cooling apparatus is a part of an ammonia-based desulfurization and decarbonization system;
the upstream of the cooling apparatus is connected to a desulfurization apparatus;
the downstream of the cooling apparatus is connected to a decarbonization apparatus; and
the process gas comes from the desulfurization apparatus and enters the decarbonization apparatus after being cooled by the cooling apparatus.

**15.** A method for cooling a process gas, the method comprising passing the process gas successively through:

a first-stage cooling function zone which uses a first circulating liquid to cool a process gas to a temperature of $T_{gas\ 1}$;
a second-stage cooling function zone which uses a second circulating liquid to cool the process gas to a temperature of $T_{gas\ 2}$; and
a third-stage cooling function zone which uses a third circulating liquid to cool the process gas to a temperature of $T_{gas\ 3}$;
using a first cold source to cool the first circulating liquid,
using a second cold source to cool the second circulating liquid, and
using a third cold source to cool the third circulating liquid,
wherein:

$$T_{gas\ 3} < T_{gas\ 2} < T_{gas\ 1} < T_{gas\ 0};$$

$T_{gas\ 0}$ is an initial temperature of the process gas when entering the first-stage cooling function zone; and the three cold sources are different.

16. The method of claim 15 wherein:

the first cold source is cooling water from a circulating cooling water or a closed cooling tower; and the first circulating liquid is cooled by a first heat exchanger.

17. The method of claim 15 wherein:

the first cold source is air; and the first circulating liquid is directly cooled by an air cooler.

18. The method of claim 15 wherein:

the second cold source is a decarbonized cold process gas, and the second circulating liquid is cooled by indirect heat exchange through a second heat exchanger, or the second circulating liquid is cooled by direct heat exchange through cross spraying of spraying liquid.

19. The method of claim 15 wherein:

the third cold source is a chilled liquid, preferably the chilled liquid is obtained by a chiller; and the third circulating liquid is cooled by a third heat exchanger, or the third circulating liquid is directly cooled by the cold source of the chiller.

20. The method of any one of claims 15-19 wherein:

$T_{gas\ 0}$ is in the range 40-80°C; and/or
$T_{gas\ 1}$ is in the range 35-48°C; and/or
$T_{gas\ 2}$ is in the range 15-40°C; and/or
$T_{gas\ 3}$ is in the range 10-30°C.

21. The method of any one of claims 15-20 wherein:

the temperature at which the first circulating liquid enters a tower is $T_{liquid1}$, and the temperature at which the first circulating liquid exits the tower is $T_{liquid\ 1'}$, wherein $T_{liquid\ 1} < T_{liquid\ 1'}$, and $T_{gas\ 0} - T_{liquid\ 1'} = \Delta T_1$;
the temperature at which the second circulating liquid enters the tower is $T_{liquid\ 2}$, and the temperature at which the second circulating liquid exits the tower is $T_{liquid2'}$, wherein $T_{liquid\ 2} < T_{liquid\ 2'}$, and $T_{gas\ 1} - T_{liquid\ 2'} = \Delta T_2$; and
the temperature at which the third circulating liquid enters the tower is $T_{liquid3}$, and the temperature at which the third circulating liquid exits the tower is $T_{liquid\ 3'}$, wherein $T_{liquid\ 3} < T_{liquid\ 3'}$, and $T_{gas\ 2} - T_{liquid\ 3'} = \Delta T_3$;
wherein each of $\Delta T_1$, $\Delta T_2$ and $\Delta T_3$ is, independently of the others, $\geq 1°C$, preferably 2-15°C, and more preferably 2-5°C..

22. The method of claim 21 wherein:

$T_{liquid\ 1}$ is in the range 10-40°C, and $T_{liquid\ 1'}$ is in the range 15-50°C; and/or
$T_{liquid\ 2}$ is in the range 15-36°C, and $T_{liquid\ 2'}$ is in the range 20-45°C; and/or
$T_{liquid\ 3}$ is in the range 0-25°C, and $T_{liquid\ 3'}$ is in the range 10-40°C.

23. The method of any one of claims 15-22 wherein:

the temperature of the first cold source is $T_{source\ 1}$ before heat exchange and $T_{source\ 1'}$ after heat exchange, wherein $T_{source\ 1} < T_{source\ 1'}$;
the temperature of the second cold source is $T_{source\ 2}$ before heat exchange and $T_{source\ 2'}$ after heat exchange, wherein $T_{source\ 2} < T_{source\ 2'}$; and
the temperature of the third cold source is $T_{source\ 3}$ before heat exchange and $T_{source\ 3'}$ after heat exchange, wherein $T_{source\ 3} < T_{source\ 3'}$.

**24.** The method of claim 23 wherein:

$T_{source\ 1}$ is in the range 5-35°C, and $T_{source\ 1'}$ is in the range 10-45°C; and/or
$T_{source\ 2}$ is in the range 10-30°C, and $T_{source\ 2'}$ is in the range 15-40°C; and/or
$T_{source\ 3}$ is in the range -17 to 10°C, and $T_{source\ 3'}$ is in the range 0-30°C.

**25.** The method of any one of claims 15-24 wherein:

the cooling method is a part of an ammonia-based desulfurization and decarbonization method;
the upstream of the cooling method is the desulfurization process, and
the downstream of the cooling method is the decarbonization process;
the process gas comes from the desulfurization process, and enters the decarbonization process after cooled by
the cooling method.

**26.** The method of any one of claims 15-24 wherein a content of ammonium sulfate:

in the cooling circulating liquid is in the range 0-5wt%; and
in the first stage is greater than that in the second stage, which is greater than that in the third stage.

Figure 1

Figure 2

Figure 3

## INTERNATIONAL SEARCH REPORT

International application No.

**PCT/CN2023/088402**

### A. CLASSIFICATION OF SUBJECT MATTER

B01D53/62(2006.01)i; B01D53/78(2006.01)i

According to International Patent Classification (IPC) or to both national classification and IPC

### B. FIELDS SEARCHED

Minimum documentation searched (classification system followed by classification symbols)

IPC: B01D53/-

Documentation searched other than minimum documentation to the extent that such documents are included in the fields searched

Electronic data base consulted during the international search (name of data base and, where practicable, search terms used)

CJFD, CNTXT, ENTXTC, DWPI, ENTXT: 江苏新世纪江南环保股份有限公司, 江南环保集团股份有限公司, 捕集, 多级, 二氧化碳, 冷却, 喷淋, 脱碳, 脱羰, 吸收, 洗涤, 塔, multi-stage, cool+, carbon dioxide, CO2, spray+, decarburization, absorb+, washing, tower

### C. DOCUMENTS CONSIDERED TO BE RELEVANT

| Category* | Citation of document, with indication, where appropriate, of the relevant passages | Relevant to claim No. |
|---|---|---|
| PX | CN 114870588 A (JIANGSU NEW CENTURY JIANGNAN ENVIRONMENTAL PROTECTION CO., LTD. et al.) 09 August 2022 (2022-08-09)<br>claims 1-26 | 1-26 |
| X | CN 113566226 A (JIANGXI CARBON NITROGEN NEW ENERGY TECHNOLOGY CO., LTD.) 29 October 2021 (2021-10-29)<br>description, paragraphs 21-27, and figure 1 | 1-2, 5-13, 15, 16, 19, 20-24, 26 |
| Y | CN 113566226 A (JIANGXI CARBON NITROGEN NEW ENERGY TECHNOLOGY CO., LTD.) 29 October 2021 (2021-10-29)<br>description, paragraphs 21-27, and figure 1 | 3, 4, 14, 17, 18, 25 |
| X | CN 112923748 A (CLEAN ENERGY RESEARCH INSTITUTE CO., LTD., CHINA HUANENG GROUP et al.) 08 June 2021 (2021-06-08)<br>description, paragraphs 21-37, and figure 1 | 1-2, 5-13, 15, 16, 19, 20-24 |
| Y | CN 112923748 A (CLEAN ENERGY RESEARCH INSTITUTE CO., LTD., CHINA HUANENG GROUP et al.) 08 June 2021 (2021-06-08)<br>description, paragraphs 21-37, and figure 1 | 3, 4, 14, 17, 18, 25 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 June 2023** | **30 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/088402**

**C.    DOCUMENTS CONSIDERED TO BE RELEVANT**

| Category* | Citation of document, with indication, where appropriate, of the relevant passages | Relevant to claim No. |
|---|---|---|
| Y | CN 2737771 Y (MACHINERY FACTORY, CHANGDA CO., LTD., JILIN CHANGSHAN CHEMICAL FERTILIZER GROUP et al.) 02 November 2005 (2005-11-02) specific embodiments, and figure 1 | 3, 4, 14, 17, 18, 25 |
| A | CN 109569209 A (HAOMU (SHANGHAI) ENERGY SAVING TECHNOLOGY CO., LTD.) 05 April 2019 (2019-04-05) entire document | 1-26 |
| A | CN 111380377 A (CHINA PETROLEUM & CHEMICAL CORPORATION et al.) 07 July 2020 (2020-07-07) entire document | 1-26 |
| A | CN 113521966 A (ZHEJIANG UNIVERSITY) 22 October 2021 (2021-10-22) 81, 81, 83, 85 | |
| A | RU 2544993 C1 (MNUSHKIN IGOR ANATOL EVICH) 20 March 2015 (2015-03-20) entire document | 1-26 |

Form PCT/ISA/210 (second sheet) (July 2022)

**INTERNATIONAL SEARCH REPORT**
Information on patent family members

International application No.

**PCT/CN2023/088402**

| Patent document cited in search report | | | Publication date (day/month/year) | Patent family member(s) | | | Publication date (day/month/year) |
|---|---|---|---|---|---|---|---|
| CN | 114870588 | A | 09 August 2022 | None | | | |
| CN | 113566226 | A | 29 October 2021 | CN | 215570568 | U | 18 January 2022 |
| CN | 112923748 | A | 08 June 2021 | CN | 214747348 | U | 16 November 2021 |
| CN | 2737771 | Y | 02 November 2005 | None | | | |
| CN | 109569209 | A | 05 April 2019 | None | | | |
| CN | 111380377 | A | 07 July 2020 | None | | | |
| CN | 113521966 | A | 22 October 2021 | CN | 215463249 | U | 11 January 2022 |
| | | | | US | 2023033705 | A1 | 02 February 2023 |
| RU | 2544993 | C1 | 20 March 2015 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201210410873
- CN 200880122376